# EUROPÄISCHE PATENTSCHRIFT

(11) **EP 3 472 538 B1**
(45) Veröffentlichungstag und Bekanntmachung des Hinweises auf die Patenterteilung: **01.04.2020**
(21) Anmeldenummer: 17752344.6
(22) Anmeldetag: 07.08.2017
(51) Int. Cl.: F25B 30/00, F25B 41/00, B61D 27/00

(54) **KLIMAANLAGE FÜR EIN SCHIENENFAHRZEUG**
AIR-CONDITIONING SYSTEM FOR A RAIL VEHICLE
SYSTÈME DE CLIMATISATION POUR VÉHICULE FERROVIAIRE

(30) Priorität: 22.08.2016 DE 102016215689
(43) Veröffentlichungstag der Anmeldung: 24.04.2019
(73) Patentinhaber: Siemens Mobility GmbH, 81739 München (DE)
(72) Erfinder: EHRIG, Markus, 47918 Tönisvorst (DE); HILDEBRANDT, Alexander, 44789 Bochum (DE); KASAP, Irfan, 44653 Herne (DE)
(86) Internationale Anmeldenummer: PCT/EP2017/069913
(87) Internationale Veröffentlichungsnummer: WO 2018/036796

(56) Entgegenhaltungen:
- EP-A1- 2 253 904
- EP-A1- 2 811 241
- DE-A1- 3 247 302
- DE-U1- 20 311 981

## Beschreibung

Die Erfindung bezieht sich auf eine Klimaanlage für ein Schienenfahrzeug nach dem Oberbegriff von Anspruch 1.

Danach ist eine Klimaanlage, beispielsweise für ein Schienenfahrzeug, bekannt, mit einem Kältekreislauf, der zwischen einem Kühlbetrieb und einem Heizbetrieb umschaltbar ist und einen ersten Wärmetauscher, der mit einer Umgebungsluft wechselwirkt sowie im Kühlbetrieb als Kondensator und im Heizbetrieb als Verdampfer arbeitet, einen zweiten Wärmetauscher, der Zuluft für einen Fahrgastinnerraum konditioniert, ein Expansionsventil, einen Verdichter und eine Ventilanordnung zum Umschalten zwischen dem Kühlbetrieb und dem Heizbetrieb aufweist. Eine solche Klimaanlage ist aus der EP 2 811 241 A1 bekannt.

Solche, häufig als Klimakompaktanlage vorgesehenen Geräte kommen nicht nur bei Schienenfahrzeugen, sondern auch bei Fahrzeugen aller Art, aber auch in Gebäuden zum Einsatz.

Bei der Klimatisierung von Schienenfahrzeugen liegen die Hauptfunktionen der Klimaanlage darin, eine Mischluft, bestehend aus Frischluft und Umluft, auf eine bestimmte Zuluft zu konditionieren, so dass in einem Fahrgastinnenraum ein gewünschter Klimakomfort eingehalten wird. Da die Klimaanlage in Schienenfahrzeugen hinter den Traktionskomponenten des Schienenfahrzeugs häufig der zweitgrößte Energieverbraucher ist, ist eine Verminderung einer Leistungsaufnahme der Klimaanlage bedeutsam. Eine der Maßnahmen dafür ist es, eine Klimaanlage, insbesondere Klimakompaktanlage, mit integrierter Wärmepumpenfunktion vorzusehen.

Dabei liegt ein Haupt-Arbeitsbereich für die Wärmepumpenfunktion typischerweise bei Außentemperaturen zwischen -5°C und +15°C. Die Arbeitsweise der Klimaanlage muss zudem den einschlägigen Normen DIN EN14750 und DIN EN13129 genügen.

Die Wärmepumpenfunktion der Klimaanlage wird durch eine Ventilanordnung ermöglicht, wobei der Kältekreislauf im Kühlbetrieb wie bei einer konventionellen Klimaanlage arbeitet, d. h. der Verdampfer kühlt die Mischluft auf eine geforderte Zulufttemperatur, wobei gleichzeitig durch Unterschreitung einer Taupunkttemperatur die Mischluft auch entfeuchtet wird. Durch Einwirken auf die Temperatur und/oder die Feuchte der Mischluft konditioniert der Verdampfer die Mischluft aus Frischluft und Umluft.

Demgegenüber führt der Kondensator eine Abwärme aus dem Arbeitsprozess des Verdampfers und des Verdichters an die Umgebung ab.

Im Heizbetrieb der Klimaanlage wird die Ventilanordnung derart eingestellt, dass der Verdampfer prozesstechnisch auf einer Außenseite angeordnet ist und die Umgebungsluft abkühlt. Dabei kondensiert durch Taupunktunterschreitung der Umgebungsluft Wasser. Bei tieferen Temperaturen unterhalb von 0°C kommt es dann zu einer Bereifung einer Wärmeübertragerfläche des Verdampfers.

Die Mischluft wird durch die Wärmepumpe aufgeheizt, da der Kondensator praktisch die Wärme des Verdichters und die Wärme des Kondensators der Mischluft zuführt.

Dabei ist jedoch zu berücksichtigen, dass die Funktion im Wärmepumpenbetrieb in der Regel auf unterhalb von -5°C begrenzt ist, da sonst der Verdampfer auf der Außenseite stark vereist. In einem Übergangsbereich zwischen -5°C und etwa +5°C wird der Kältekreislauf entweder für eine gewisse Zeit unterbrochen, bis das Eis an der Wärmeübertragerfläche des Verdampfers wieder geschmolzen ist, oder es findet eine Prozessumkehr statt. Bei einer Prozessumkehr würde auf den Kühlbetrieb umgeschaltet werden. Darauf wird jedoch in der Regel verzichtet, da man dann den Innenraum kühlen würde statt zu heizen.

Beide Maßnahmen führen zu einer Unterbrechung der Wärmepumpenfunktion des Kältekreislaufs, so dass es erforderlich ist, eine stromabwärts des zweiten Wärmetauschers angeordnete elektrische Heizeinrichtung zuzuschalten, um die Mischluft auf eine geeignete Temperatur zu bringen, dass sie als Zuluft dem Fahrgastinnenraum zugeführt werden kann. Die Zuschaltung der elektrischen Heizeinrichtung führt zu einer Schwankung der Zulufttemperatur, da zunächst die elektrische Heizeinrichtung selbst aufgeheizt werden muss, was durch eine Wärmekapazität der elektrischen Heizeinrichtung bestimmt ist. Somit kann nicht sofort exakt die gleiche Zulufttemperatur eingestellt werden.

Letztlich bewirkt die Unterbrechung der Wärmepumpenfunktion und die Zuschaltung der elektrischen Heizeinrichtung eine Schwankung der Zulufttemperatur für den Fahrgastinnenraum, was eine Einhaltung der oben genannten einschlägigen Normen stark erschwert.

Hinzu kommt, dass der Einsatz der elektrischen Heizeinrichtung das Vorsehen verschiedener Sicherheitseinrichtungen bedingt, da an Heizelementen der elektrischen Heizeinrichtung sehr hohe Oberflächentemperaturen von beispielsweise mehr als 300°C auftreten können.

Ausgehend hiervon liegt der Erfindung die Aufgabe zugrunde, die eingangs beschriebene Klimaanlage derart weiterzuentwickeln, dass Schwankungen in der Zulufttemperatur für den Fahrgastinnenraum/Gebäudeinnenraum aufgrund einer Unterbrechung des Wärmepumpenbetriebs vermindert werden.

Diese Aufgabe wird gelöst durch eine Klimaanlage nach Anspruch 1.

Danach ist die eingangs genannte Klimaanlage derart weitergebildet, dass der Kältekreislauf einen Primärkältekreislauf, der den ersten Wärmetauscher, das Expansionsventil, den Verdichter, die Ventilanordnung zum Umschalten zwischen dem Kühlbetrieb und dem Heizbetrieb sowie eine Primärseite eines dritten Wärmetauschers umfasst, der im Kühlbetrieb als Verdampfer und im Heizbetrieb als Kondensator arbeitet, sowie einen Sekundärkältekreislauf aufweist, der die Sekundärseite des dritten Wärmetauschers und den zweiten Wärmetauscher umfasst, wobei zwischen einem Kältefluidauslass auf der Sekundärseite des dritten Wärmetauschers und einem Kältefluideinlass des zweiten Wärmetauschers eine zuschaltbare elektrische Heizeinrichtung zum Aufheizen eines Kühlmittelzuflusses für den zweiten Wärmetauscher angeordnet ist.

Durch die Aufteilung des Kältekreislaufs in einen Primärkältekreis und einen Sekundärkältekreis, die über den dritten Wärmetauscher miteinander verbunden sind, ist es möglich, Temperaturschwankungen in der Zuluft für den Fahrgastinnenraum zu vermindern. Denn der Sekundärkältekreislauf arbeitet in der Art eines thermischen Speichers und die elektrische Heizeinrichtung wirkt nicht, wie im Stand der Technik bekannt, auf die Zulufttemperatur, sondern auf die Temperatur des Kühlmittelzuflusses für den zweiten Wärmetauscher, der die Konditionierung der Luft bewirkt, die in den Fahrgastinnenraum zu leiten ist.

Die elektrische Heizeinrichtung kann als Tauchsieder ausgebildet sein. In dieser Weise wird eine einfache Realisierung der elektrischen Heizeinrichtung bewirkt.

Bevorzugt ist eine Wärmespeicherkapazität des Sekundärkältekreislaufs so ausgelegt, dass sich kurze Unterbrechungen des Wärmepumpenbetriebs nicht negativ auf die Zulufttemperatur auswirken.

Die Wärmespeicherkapazität des Sekundärkältekreislaufs kann noch dadurch erhöht werden, dass der Sekundärkältekreislauf mit einem Reservoir ausgestattet ist. Der Tauchsieder ist in diesem Fall in das Reservoir für das Kältemittel des Sekundärkältekreislaufs integriert. Das Vorsehen eines Reservoirs im Sekundärkältekreislauf ermöglicht, dass ein Wärmepumpenbetrieb der Klimaanlage in Intervallen mit maximaler Effizienz ausgeführt werden kann. Unterbrechungen im Wärmepumpenbetrieb werden, insbesondere durch das Reservoir, ausgeglichen.

Der Wärmepumpenbetrieb kann zudem im Wesentlichen ohne Vereisung erfolgen, denn ein Abtauen von Wasser am Verdampfer kann während Betriebspausen erfolgen, ohne dass mit negativen Auswirkungen auf die Einhaltung der gewünschten Zulufttemperatur gerechnet werden muss.

Insofern ist es bevorzugt, dass die Klimaanlage in ihrem Heizbetrieb derart intervallartig arbeitet, dass ein Abtauen des ersten Wärmetauschers, der mit der Außenluft wechselwirkt, ermöglicht ist.

Die Ventilanordnung kann von einem Vierwegeventil gebildet sein. In diesem Fall ist das Vierwegeventil mit einem ersten Anschluss, der mit einem Kältefluideinlass des ersten Wärmetauschers im Kühlbetrieb verbunden ist, einem zweiten Anschluss, der mit einem Kältefluidauslass auf der Primärseite des dritten Wärmetauschers im Kühlbetrieb verbunden ist, einem dritten Anschluss, der mit einer Eingangsseite des Verdichters verbunden ist und einem vierten Anschluss, der mit einer Ausgangsseite des Verdichters verbunden ist, ausgestattet.

Ein Kühlbetrieb der Klimaanlage kann dann dadurch realisiert sein, dass das Vierwegeventil derart geschaltet ist, dass ein zweiter Anschluss mit dem dritten Anschluss und sein vierter Anschluss mit dem ersten Anschluss strömungstechnisch verbunden sind. Demgegenüber kann im Heizbetrieb der erste Anschluss mit dem dritten Anschluss und der vierte Anschluss mit dem zweiten Anschluss des Vierwegeventils strömungstechnisch verbunden sein.

Bevorzugt ist der dritte Wärmetauscher als Plattenwärmeübertrager ausgeführt. Dies gewährleistet einen effektiven Wärmeaustausch zwischen dem Primär- und dem Sekundärkältekreislauf.

Der Sekundärkältekreislauf kann mit einem Sole-Wasser-Gemisch als Kältemittel arbeiten. Für den Primärkältekreislauf können gängige Kältemittel eingesetzt werden.

Die Umgebungsluft kann an dem ersten Wärmetauscher mittels eines ersten Ventilators vorbeigeführt sein, während an dem zweiten Wärmetauscher, der die konditionierte Zuluft für den Fahrgastinnenraum bereitstellt, ebenfalls ein Ventilator zum Ansaugen der Zuluft verwendbar ist.

Ausführungsbeispiele der Erfindung werden nachfolgend unter Bezugnahme auf die Zeichnungen noch näher erläutert. Es zeigen:
- Figur 1: eine schematische Darstellung eines Kältekreislaufs mit Wärmepumpenfunktion in einem Kühlbetrieb in einer ersten Ausführungsform,
- Figur 2: eine schematische Darstellung des Kältekreislaufs von Figur 1 in einem Heizbetrieb,
- Figur 3: eine schematische Darstellung eines Kältekreislaufs mit Wärmepumpenfunktion in einem Kühlbetrieb in einer zweiten Ausführungsform und
- Figur 4: eine schematische Darstellung des Kältekreislaufs von Figur 3 in einem Heizbetrieb.

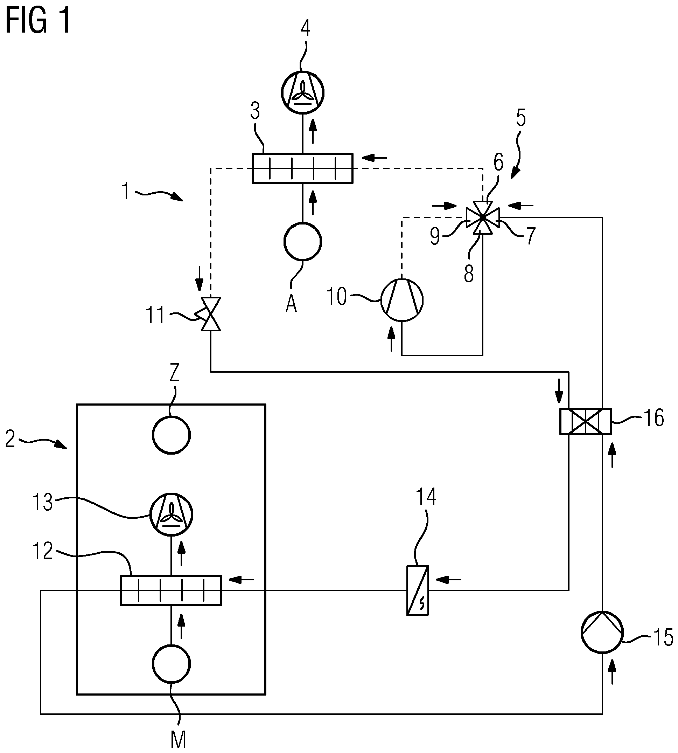

Die anhand der Figuren 1 bis 4 veranschaulichten Kältekreisläufe sind beispielsweise in einer Kompaktklimaanlage realisiert, wie sie bei einem Schienenfahrzeug zum Einsatz kommt. Die Kältekreisläufe können jedoch ebenso im Bereich anderer Fahrzeuge und in der Gebäudetechnik zum Einsatz kommen.

Es ist hervorzuheben, dass in den Zeichnungen mit durchgezogenen Linien veranschaulichte strömungstechnische Verbindungen solche sind, bei denen das Kühlfluid eine eher niedrige Temperatur hat, während mit gestrichelten Linien dargestellte strömungstechnische Verbindungen auf ein Kältefluid mit erhöhter Temperatur hindeuten.

In Figur 1 ist ein Kühlbetrieb für einen Kältekreislauf mit Wärmepumpenfunktion dargestellt. Der Kältekreislauf umfasst einen Primärkältekreislauf 1 und einen Sekundärkältekreislauf 2. Der Primärkältekreislauf 1 weist einen ersten Wärmetauscher 3 auf, der mit Umgebungsluft zusammenwirkt und im Kühlbetrieb als Verdampfer arbeitet. Die Umgebungsluft wird mit Hilfe eines Ventilators 4 an dem ersten Wärmetauscher 3 vorbeigeführt. Im in Figur 1 dargestellten Kühlbetrieb für den Kältekreislauf arbeitet der erste Wärmetauscher 3 als Verdampfer. Auf einer Einlassseite des ersten Wärmetauschers 3 im Kühlbetrieb ist ein Vierwegeventil 5 angeschlossen, das mit vier Anschlüssen 6, 7, 8, 9 ausgestattet ist. Ein erster Anschluss 6 des Vierwegeventils ist mit der Eingangsseite des ersten Wärmetauschers 3 im Kühlbetrieb verbunden. Da der erste Anschluss 6 des Vierwegeventils 5 im Kühlbetrieb durch geeignete Einstellung des Vierwegeventils 5 mit dessen viertem Anschluss 9 verbunden ist, der strömungstechnisch mit einer Auslassseite eines Verdichters 10 verbunden ist, strömt erwärmtes Kältefluid des Primärkältekreislaufs 1 in den ersten Wärmetauscher 3 ein. Eine Eingangsseite des Verdichters 10 ist über das Vierwegeventil 5, insbesondere über dessen zweiten 7 und dritten Anschluss 8, mit dem Sekundärkältekreislauf 2 verbunden.

Kältefluid, das den ersten Wärmetauscher 3 auf dessen Ausgangsseite verlässt, gelangt zu einem Expansionsventil 11, kühlt sich dort ab, und von dort aus in Richtung zu dem Sekundärkältemittelkreislauf 2.

Der Sekundärkältekreislauf 2 umfasst einen zweiten Wärmetauscher 12, der zum Konditionieren von Zuluft Z für einen Fahrgastinnenraum, beispielsweise eines Schienenfahrzeugs. Ein Ventilator 13 saugt dem Kompaktklimagerät bereitgestellte Mischluft M aus Außenluft und Umluft an und führt diese an dem zweiten Wärmetauscher 12 vorbei. Im hier dargestellten Kühlbetrieb wird die Mischluft an dem Wärmetauscher 9 abgekühlt und dann mittels des Ventilators 13 in Richtung auf den Fahrgastinnenraum befördert.

Zudem umfasst der Sekundärkältekreislauf 2 einen Tauchsieder 14, der bedarfsweise zugeschaltet werden kann. Das Kältefluid im Sekundärkältekreislauf 2, bei dem es sich um ein Wasser-Sole-Gemisch handelt, wird mit Hilfe einer Kreiselpumpe 15 gefördert.

Der Primärkältekreislauf 1 und der Sekundärkältekreislauf 2 sind über einen dritten Wärmetauscher 16 miteinander verbunden, der im Kühlbetrieb als Kondensator, im Heizbetrieb jedoch als Verdampfer arbeitet und als Plattenwärmeübertrager ausgeführt ist. Dessen Primärseite ist einerseits mit dem Expansionsventil 11 und andererseits mit dem zweiten Auslass 7 des Vierwegeventils 5 verbunden. Im Kühlbetrieb strömt von dem Expansionsventil 11 kommendes, abgekühltes Kältefluid des Primärkältekreislaufs 1 in den dritten Wärmetauscher 12 ein, wechselwirkt mit dem Kältefluid des Sekundärkältekreislaufs 2 und verlässt den dritten Wärmetauscher 12 in Richtung auf den zweiten Anschluss 7 des Vierwegeventils 5.

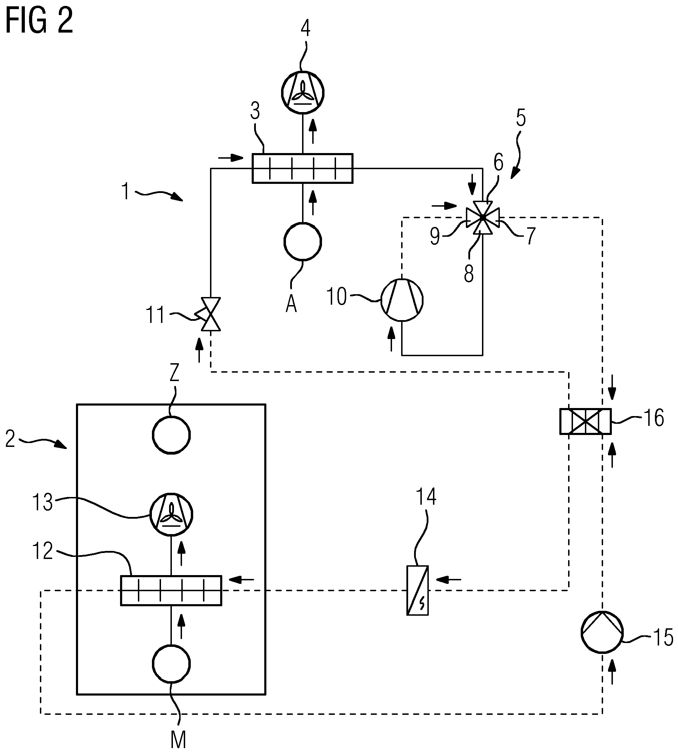

Im anhand von Figur 2 dargestellten Heizbetrieb übt der Kältekreislauf eine Wärmepumpenfunktion aus. Die strömungstechnische Anordnung des Primärkältekreislaufs 1 unterscheidet sich von derjenigen, die anhand von Figur 1 gezeigt ist, durch die Einbindung des Verdichters 10. Dessen Eingangsseite ist nunmehr strömungstechnisch über den ersten 6 und den dritten Anschluss 8 des Vierwegeventils 5 mit einer Ausgangsseite für Kältefluid des ersten Wärmetauschers 3 im Heizbetrieb verbunden (dies entspricht die Einlassseite im Kühlbetrieb). Der erste Wärmetauscher 3 wird nunmehr in umgekehrter Richtung durchströmt als im Kühlbetrieb.

Im anhand von Figur 1 veranschaulichten Kühlbetrieb des Kältekreislaufs überträgt der dritte Wärmetauscher 16, der hier als Kondensator arbeitet, die Temperatur des Kältemittels des Primärkältekreislaufs 1, wie sie auf der Ausgangsseite des Expansionsventils 8 vorliegt. Der Tauchsieder 14 ist im Kühlbetrieb ohne Funktion.

Im Heizbetrieb nach Figur 2 wird der Kältekreislauf, insbesondere bei Außentemperaturen zwischen -5°C und +5°C, in Intervallen betrieben, d. h. die Wärmepumpenfunktion wird in Intervallen unterbrochen, wobei auf eine auch wirkliche Prozessumkehr aus Sicht einer Energieeffizienz möglichst verzichtet wird, so dass in Ruheintervallen ein Enteisen/Abtauen von kondensiertem Wasser aus der Außenluft A an dem ersten Wärmetauscher 3 ermöglicht wird. Durch ein (kurzzeitiges) Absinken des Wärmeübertrags am dritten Wärmetauscher 16 wird der Einsatz des Tauchsieders 14 erforderlich. Dieser ist zwischen der Sekundärseite des dritten Wärmetauschers 16 und einer Kältemittel-Zuflussseite des zweiten Wärmetauschers 12 angeordnet und heizt das Kältefluid des Sekundärkältekreislaufs 2 bedarfsweise derart auf, dass die Temperatur der Zuluft Z für den Fahrgastinnenraum von der Um-/Abschaltung des Kältekreislaufs möglichst unbeeinflusst bleibt.

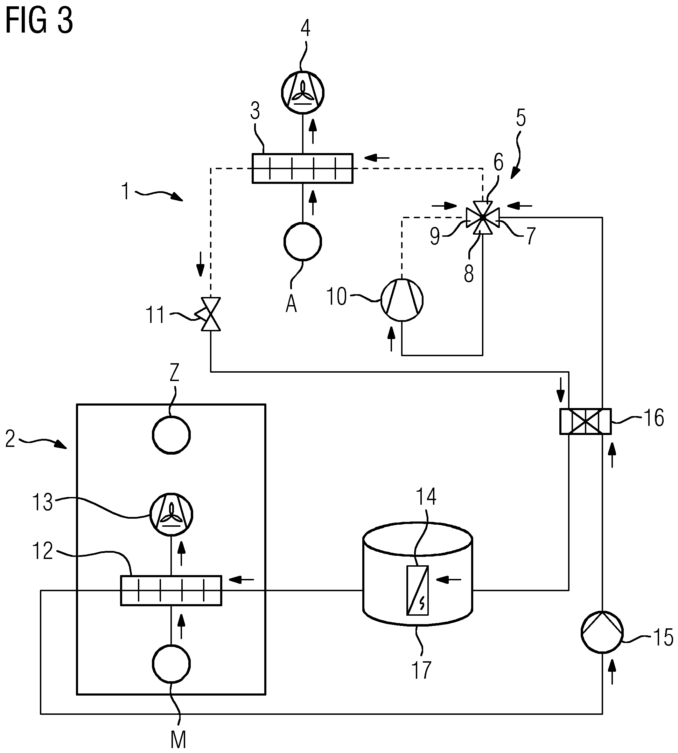

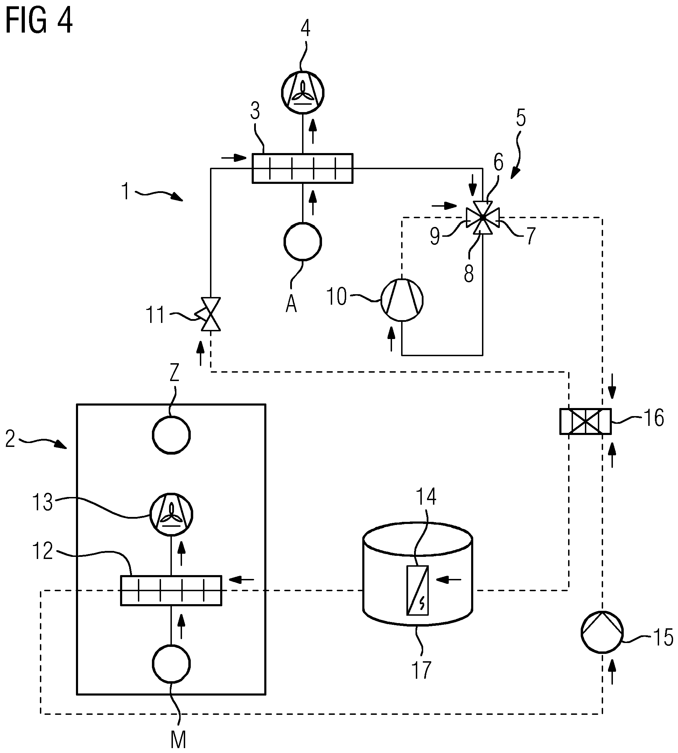

Die Figuren 3 und 4 zeigen eine zweite Ausführungsform eines Kältekreislaufs mit Wärmepumpenfunktion. Gegenüber der vorstehend erläuterten ersten Ausführungsform ist der Sekundärkältekreislauf 2 um ein Reservoir 17 für das Kältefluid des Sekundärkältekreislaufs 2 erweitert. In dieses Reservoir 17 ist der Tauchsieder 14 integriert, so dass bei einer Unterbrechung der Wärmepumpenfunktion des Kältekreislaufs ausreichend Kältefluid gewünschter Temperatur zur Verfügung steht, so dass die Temperatur der Zuluft Z, die am zweiten Wärmetauscher 12 konditioniert wird, möglichst keinen Schwankungen unterliegt.

## Patentansprüche

1. Klimaanlage für ein Schienenfahrzeug, mit einem Kältekreislauf, der zwischen einem Kühlbetrieb und einem Heizbetrieb umschaltbar ist und
- einen ersten Wärmetauscher (3), der mit einer Umgebungsluft (A) wechselwirkt sowie im Kühlbetrieb als Kondensator und im Heizbetrieb als Verdampfer arbeitet,
- einen zweiten Wärmetauscher (12), der Zuluft (Z) für einen Fahrgastinnerraum konditioniert,
- ein Expansionsventil (11), einen Verdichter (10) und eine Ventilanordnung zum Umschalten zwischen dem Kühlbetrieb und dem Heizbetrieb aufweist,
**dadurch gekennzeichnet, dass**
der Kältekreislauf
- einen Primärkältekreislauf (1) aufweist, der den ersten Wärmetauscher (3), das Expansionsventil (11), den Verdichter (10), die Ventilanordnung zum Umschalten zwischen dem Kühlbetrieb und dem Heizbetrieb sowie eine Primärseite eines dritten Wärmetauschers (16) umfasst, der im Kühlbetrieb als Verdampfer und im Heizbetrieb als Kondensator arbeitet, und
- einen Sekundärkältekreislauf (2) aufweist, der die Sekundärseite des dritten Wärmetauschers (16) und den zweiten Wärmetauscher (12) umfasst,
- wobei zwischen einem Kältefluidauslass auf der Sekundärseite des dritten Wärmetauschers (16) und einem Kältefluideinlass des zweiten Wärmetauschers (12) eine zuschaltbare elektrische Heizeinrichtung zum Aufheizen eines Kühlmittelzuflusses für den zweiten Wärmetauscher (12) angeordnet ist.

2. Klimaanlage nach Anspruch 1,
**dadurch gekennzeichnet, dass**
die elektrische Heizeinrichtung als Tauchsieder (14) ausgebildet ist.

3. Klimaanlage nach Anspruch 2,
**dadurch gekennzeichnet, dass**
der Tauchsieder (14) in ein Reservoir (17) für das Kältemittel des Sekundärkältekreislaufs (2) integriert ist.

4. Klimaanlage nach einem der Ansprüche 1 bis 3,
**dadurch gekennzeichnet, dass**
sie in ihrem Heizbetrieb derart intervallartig arbeitet, dass an dem ersten Wärmetauscher (3) ein Abtauen ermöglicht ist.

5. Klimaanlage nach einem der Ansprüche 1 bis 4,
**dadurch gekennzeichnet, dass**
die Ventilanordnung von einem Vierwegeventil (5) gebildet ist, mit einem ersten Anschluss (6), der mit einem Kältefluideinlass des ersten Wärmetauschers (3) im Kühlbetrieb verbunden ist, einem zweiten Anschluss (7), der mit einem Kältefluidauslass auf der Primärseite des dritten Wärmetauschers (12) im Kühlbetrieb verbunden ist, einem dritten Anschluss (8), der mit einer Eingangsseite des Verdichters verbunden ist, und einem vierten Anschluss (9), der mit einer Ausgangsseite des Verdichters (7) verbunden ist.

6. Klimaanlage nach Anspruch 5,
**dadurch gekennzeichnet, dass**
in dem Kühlbetrieb das Vierwegeventil (5) derart geschaltet ist, dass sein zweiter Anschluss (7) mit dem dritten Anschluss (8) und sein vierter Anschluss (9) mit dem ersten Anschluss (6) strömungstechnisch verbunden sind, während im Heizbetrieb der erste Anschluss (6) mit dem dritten Anschluss (8) und der vierte Anschluss (9) mit dem ersten Anschluss (6) strömungstechnisch verbunden ist.

7. Klimaanlage nach einem der Ansprüche 1 bis 6,
**dadurch gekennzeichnet, dass**
der dritte Wärmetauscher (16) als Plattenwärmeübertrager ausgeführt ist.

8. Klimaanlage nach einem der Ansprüche 1 bis 7,
**dadurch gekennzeichnet, dass**
der Sekundärkältekreislauf (1) mit einem Sole-Wasser-Gemisch als Kältemittel arbeitet.

9. Klimaanlage nach einem der Ansprüche 1 bis 8,
**dadurch gekennzeichnet, dass**
die Umgebungsluft an dem ersten Wärmetauscher (3) mittels eines ersten Ventilators (4) vorbeigeführt ist.

10. Klimaanlage nach einem der Ansprüche 1 bis 9,
**dadurch gekennzeichnet, dass**
zu konditionierende Zuluft (Z) für den Fahrgastinnenraum an dem zweiten Wärmetauscher (12) mittels eines zweiten Ventilators (10) vorbeigeführt ist.

## Claims

1. Air-conditioning system for a rail vehicle, having a refrigeration circuit which is able to be switched between a cooling mode and a heating mode and which has
- a first heat exchanger (3), which interacts with ambient air (A) and works as a condenser in the cooling mode and as an evaporator in the heating mode,
- a second heat exchanger (12), which conditions supply air (Z) for a passenger interior compartment,
- an expansion valve (11), a compressor (10) and a valve arrangement for switching between the cooling mode and the heating mode,
**characterized in that**
the refrigeration circuit
- has a primary refrigeration circuit (1), which comprises the first heat exchanger (3), the expansion valve (11), the compressor (10), the valve arrangement for switching between the cooling mode and the heating mode and a primary side of a third heat exchanger (16), which works as an evaporator in the cooling mode and as a condenser in the heating mode, and
- has a secondary refrigeration circuit (2), which comprises the secondary side of the third heat exchanger (16) and the second heat exchanger (12),
- wherein an activatable electric heating device for heating a coolant inflow for the second heat exchanger (12) is arranged between a refrigerating fluid outlet on the secondary side of the third heat exchanger (16) and a refrigerating fluid inlet of the second heat exchanger (12).

2. Air-conditioning system according to Claim 1,
**characterized in that**
the electric heating device is designed as an immersion heater (14) .

3. Air-conditioning system according to Claim 2,
**characterized in that**
the immersion heater (14) is integrated into a reservoir (17) for the refrigerant of the secondary refrigeration circuit (2) .

4. Air-conditioning system according to one of Claims 1 to 3,
**characterized in that**,
in its heating mode, said air-conditioning system works at intervals such that thawing is made possible at the first heat exchanger (3).

5. Air-conditioning system according to one of Claims 1 to 4,
**characterized in that**
the valve arrangement is formed by a four-way valve (5) having a first port (6), which is connected to a refrigerating fluid inlet of the first heat exchanger (3) in the cooling mode, a second port (7), which is connected to a refrigerating fluid outlet on the primary side of the third heat exchanger (12) in the cooling mode, a third port (8), which is connected to an entry side of the compressor, and a fourth port (9), which is connected to an exit side of the compressor (7).

6. Air-conditioning system according to Claim 5,
**characterized in that**,
in the cooling mode, the four-way valve (5) is switched such that its second port (7) is connected in terms of flow to the third port (8) and its fourth port (9) is connected in terms of flow to the first port (6), while, in the heating mode, the first port (6) is connected in terms of flow to the third port (8) and the fourth port (9) is connected in terms of flow to the first port (6).

7. Air-conditioning system according to one of Claims 1 to 6,
**characterized in that**
the third heat exchanger (16) is designed as a plate-type heat exchanger.

8. Air-conditioning system according to one of Claims 1 to 7,
**characterized in that**
the secondary refrigeration circuit (1) works with a brine/water mixture as refrigerant.

9. Air-conditioning system according to one of Claims 1 to 8,
**characterized in that**
the ambient air is guided past the first heat exchanger (3) by means of a first fan (4).

10. Air-conditioning system according to one of Claims 1 to 9,
**characterized in that**
supply air to be conditioned (Z) for the passenger interior compartment is guided past the second heat exchanger (12) by means of a second fan (10).

## Revendications

1. Installation de climatisation d'un véhicule ferroviaire, comprenant un circuit de froid, qui peut être commuté entre un fonctionnement en refroidissement et un fonctionnement en chauffage et qui a
- un premier échangeur de chaleur (3), qui interagit avec de l'air (A) ambiant, tant en fonctionnement en refroidissement, comme condenseur, qu'en fonctionnement en chauffage, comme évaporateur,
- un deuxième échangeur de chaleur (12), qui conditionne l'air (Z) affluent dans un espace intérieur pour passager,
- un détendeur (11), un compresseur (10) et un agencement de vanne pour commuter entre le fonctionnement en refroidissement et le fonctionnement en chauffage,
**caractérisée en ce que**
le circuit de froid
- a un circuit (1) de froid primaire, qui comprend le premier échangeur de chaleur (3), le détendeur (11), le compresseur (10), l'agencement de vanne pour commuter entre le fonctionnement en refroidissement et le fonctionnement en chauffage, ainsi qu'un côté primaire d'un troisième échangeur de chaleur (16), qui, dans le fonctionnement en refroidissement, fonctionne en évaporateur, et dans le fonctionnement en chauffage, en condenseur, et
- a un circuit (2) de froid secondaire, qui comprend le côté secondaire du troisième échangeur de chaleur (16) et le deuxième échangeur de chaleur (12),
- dans lequel, entre une sortie de fluide réfrigérant du côté secondaire du troisième échangeur de chaleur (16) et une entrée de fluide réfrigérant du deuxième échangeur de chaleur (12), est monté un dispositif de chauffage électrique pouvant être branché pour chauffer un afflux de fluide réfrigérant pour le deuxième échangeur de chaleur (12).

2. Installation de climatisation suivant la revendication 1, **caractérisée en ce que**
le dispositif de chauffage électrique est constitué sous la forme d'un thermoplongeur (14).

3. Installation de climatisation suivant la revendication 2, **caractérisée en ce que**
le thermoplongeur (14) est intégré dans un réservoir (17) de l'agent réfrigérant du circuit (2) de froid secondaire.

4. Installation de climatisation suivant l'une des revendications 1 à 3,
**caractérisée en ce qu'**
elle fonctionne en fonctionnement en chauffage par intervalle, de manière à permettre un dégivrage du premier échangeur de chaleur (3).

5. Installation de climatisation suivant l'une des revendications 1 à 4,
**caractérisée en ce que**
l'agencement de vanne est formé d'une vanne (5) à quatre voies, ayant un premier raccord (6), qui communique, en fonctionnement en refroidissement, avec une entrée de fluide réfrigérant du premier échangeur de chaleur (3), un deuxième raccord (7), qui communique, en fonctionnement en refroidissement, avec une sortie de fluide réfrigérant du côté primaire du troisième échangeur de chaleur (12), un troisième raccord (8), qui communique avec un côté d'entrée du compresseur et un quatrième raccord (9), qui communique avec un côté de sortie du compresseur (7).

6. Installation de climatisation suivant la revendication 5, **caractérisée en ce que**,
dans le fonctionnement en refroidissement, la vanne (5) à quatre voies est mise de manière à ce que son deuxième raccord (7) communique fluidiquement avec le troisième raccord (8) et son quatrième raccord (9) avec le premier raccord (6), tandis que dans le fonctionnement en chauffage, le premier raccord (6) communique fluidiquement avec le troisième raccord (8) et le quatrième raccord (9) avec le premier raccord (6).

7. Installation de climatisation suivant l'une des revendications 1 à 6,
**caractérisée en ce que**
le troisième échangeur de chaleur (16) est réalisé sous la forme d'un échangeur de chaleur à plaque.

8. Installation de climatisation suivant l'une des revendications 1 à 7,
**caractérisée en ce que**
le circuit (1) de froid secondaire fonctionne avec un mélange saumure-eau, comme fluide réfrigérant.

9. Installation de climatisation suivant l'une des revendications 1 à 8,
**caractérisée en ce que**
l'air ambiant passe devant le premier échangeur de chaleur (3) au moyen d'un premier ventilateur (4).

10. Installation de climatisation suivant l'une des revendications 1 à 9,
**caractérisée en ce que**
de l'air (Z) affluent à conditionner pour l'espace intérieur de passagers passe devant le deuxième échangeur de chaleur (12) au moyen d'un deuxième ventilateur (10).
